# EUROPEAN PATENT SPECIFICATION

(11) **EP 2 070 848 B1**
(45) Date of publication and mention of the grant of the patent: **25.05.2011**
(21) Application number: 08170855.4
(22) Date of filing: 05.12.2008
(51) Int. Cl.: B65G 49/06

(54) **Method and apparatus for handling glass sheets**
Verfahren und Vorrichtung zum Behandeln von Glasscheiben
Procédé et appareil pour manutentionner des feuilles de verre

(30) Priority: 06.12.2007 WO PCT/IT2007/000854
(43) Date of publication of application: 17.06.2009
(73) Proprietor: Officine Mistrello S.r.l., 35040 Ponso (Padova) (IT)
(72) Inventor: Aldegheri, Matteo, 35045 Ospedaletto Euganeo (Padova) (IT); Mistrello, Marco, 35040 Ponso (Padova) (IT)
(74) Representative: Bonvicini, Davide

(56) References cited:
- EP-A- 1 471 017
- JP-A- 2 225 225
- JP-A- 6 255 772
- JP-A- 7 061 597
- US-A- 4 623 296
- US-A- 5 256 030
- US-A- 5 632 595

## Description

The present invention relates to a method and an apparatus for handling glass sheets, preferably large flat glass sheets.

Such method and such apparatus may be conveniently employed in industrial warehouses or factories for glass sheet handling, i.e. for loading and/or unloading, selecting and transferring glass sheets from one area to another, as well as for grouping glass sheets in racks.

While glass sheets have varying sizes depending on their expected use, they generally have a standard 6000 x 3210 mm size, with thicknesses in a range from 2 to 22 mm.

As a result of these large sizes, the sheets may have considerable weights. By way of example, a 18 m², 22 mm thick sheet has a weight of about 1 ton. Also, if two or more sheets are joined together by glue (PVB) to form a multi-layer sheet, the sheet weight obviously becomes even larger.

In view of the above, there arises the apparent need to quickly and safely handling said glass sheets, in spite of their large size and weight. Furthermore, the glass sheets have to be handled with the utmost care for preventing their integrity from being affected in any manner.

Considering the above needs, glass sheet handling within industrial warehouses or factories should not be a manual process, and should be carried out using special equipment, and following suitable handling methods whereby the sheets can be picked up from a manufacturing or loading area and transferred to an operating or unloading area and/or vice versa.

In particular, due to the enormous weight of the glass sheets is necessary to handle the sheets edgeways, that is according to a substantially vertical orientation with respect to the floor, to avoid that inflexions of the sheet, due to its own weight, may lead to the breaking of the sheets themselves.

Typically, the sheets to be picked up are stored edgewise in packs on stands or racks which are slightly inclined to the vertical. Each pack has at least one first sheet providing front access by the handling apparatus that is designed to pick it up.

It is further known to interpose one or more spacers in a sheet pack for spacing and separating two contiguous sheets, or to introduce such spacers to separate two glass sheet packs. Such spacers are associated to the sheets by adhesives and the like by form fit with the edges of the glass sheets, thereby being easily removable from the sheets. Thus, any time a glass sheet has to be handled, any spacers associated therewith need to be removed. This is needed because the spacers are an obstacle for glass sheet handling, whether the glass sheets are to be transferred to a warehouse or the glass sheets are to be conveyed to a workstation.

In prior art glass sheet handling apparatus, the presence of spacers between the glass sheets requires the operation of such apparatus to be stopped to allow an operator to enter the operating area and manually remove the spacers as they appear on the outer side of the glass sheet pack, which cause time waste, and consequent cost increases due to reduced throughput. Furthermore, there are not many opportunities for automation of the glass sheet handling process, because the presence of an operator is always needed.

Apparatus for handling small glass sheets for removing the spacers interposed between the sheets are known.

So, for example, JP 02 225225 discloses an apparatus for handling small glass sheets in which a sled is supported by a frame drove longitudinally on a rail. The sled has a balancing arm, rotatable around an axis parallel with respect to the floor and which picks up a vertical sheet stocked on stands one-by-one by a first suction cups unit and, contemporaneously, it keeps the spacer which is put on the same sheet by a second suction cups unit. By an oscillatory movement of the balancing arm the sheet is rotated of about 180° so it is transferred on a gripper device of the sheet. The balancing arm transfers the sheet to the holding device which keeps the sheet. The balancing arm transfers only the spacer and, once the sheet has been released, it makes an opposite rotation of about 90° for releasing the spacer on a spacer box. Such apparatus has enormous complexities on the sheets handling and it provides one or more moving steps during which the glass sheet is moved horizontally and not in a edgeways, which is no suitable for handling large glass sheets. Moreover, the presence of a further holding device of the sheet highly extends the stocked times of the sheets and involves an increase of the complexity and costs of the apparatus because of the presence of the further gripper device.

JP 07 061597 discloses an apparatus for handling small glass sheets comprising a balancing arm rotatable around an axis parallel with respect to the floor which, by a suction cup unit, picks up a sheet one-by-one from a pack of sheets that are vertically stocked on stands. The balancing arm has also an aspirating unit for picking up the spacer that is interposed between the sheets. By a first oscillatory movement of the balancing arm the sheet is picked up and is rotated of about 90° so that it is transferred on a horizontal conveyor belt. Next to the release of the sheet on the conveyor belt, the balancing arm rotates again of about 90° for picking up the spacer by the aspirating unit. By a second oscillatory movement of the balanced arm the spacer is picked up and put away, by a rotation of about 90°, so it is transferred on a belt able to keep the spacers. Such apparatus has the drawback of providing a slow sheets handling because the picking up and the stocking of the sheets and the picking up and the stocking of the spacers are carried out by separate steps. Further, the apparatus provides mostly oscillating movements. Even in this case, the moving of the glass sheets provides one or more moving steps during which the glass sheet is moved horizontally and not in a edgeways, which is not suitable for handling large glass sheets.

JP 06 255772 discloses an apparatus for handling small glass sheets comprising a frame for holding horizontal stocking sheets which is horizontally rotatable around a first axis perpendicular with respect to the floor. Such frame comprises at an its end an arm which, in turn, is rotatable around a second axis parallel to the first axis and it has a suction cup holding unit for picking up the sheets and an aspirating unit for picking up the spacers. A drawback of such apparatus is the possibility of only moving the sheets horizontally, with the limitations that such feature involves.

It shall be noted that the apparatus disclosed on JP 02 225225, JP 07 061597 and JP 06 255772 refer to apparatus having structural and functional features such that they are suitable for handling small sheets, on the moving of which there are no problems to move the sheets also horizontally, not in a edgeways.

Another prior art document is US 5 256 030. It discloses a method and apparatus for taking away glass plates standing on a pallet while removing spacers. The apparatus comprises a frame, motion imparting means for driving the frame and removal means to remove spacers from the glass plate. The removal means comprise a pair of electromagnetic holders wherein both of the holders are used to remove one of the spacers on a glass plate. Each electromagnetic holder is supported by a tube which is longitudinally movably mounted on the frame and a pneumatic cylinder having a piston rod mounted on the frame to advance and retreat the tube. Moreover, the electromagnetic holder is swingable toward the right or toward the left, being rotatable around a vertical axis parallel to the frame. A drawback of this apparatus is that the removal means can remove spacers only if they are positioned exactly in front of the electromagnetic holders.

Therefore, the object of the present invention is to conceive a method for handling glass sheets that fulfills the above mentioned needs, while obviating the above prior art drawbacks. Particularly, a method for handling glass sheets that provides greater effectiveness and reduces downtimes, as well as improved functionality and flexibility.

The above object is fulfilled by a method for handling glass sheets as defined in claim 1.

In another aspect, the invention relates to an apparatus for handling large glass sheets as defined in claim 8, as well as to a warehouse as defined in claim 17.

Further features and advantages of the present invention will be more apparent from the following detailed description of a few preferred, non limiting embodiments thereof, which is given with reference to the accompanying drawings. In these drawings,
- Figure 1 is a schematic view of a glass sheet producing plant or warehouse in which the sheet handling apparatus of this invention may be operated;
- Figure 2 is a perspective front view of the apparatus for handling glass sheets according to the present invention;
- Figure 3 is a side perspective view of the apparatus of Figure 1;
- Figure 4 is a perspective front view of the apparatus for handling glass sheets according to another embodiment of the present invention;
- Figure 5 is a side perspective view of the apparatus of Figure 1;
- Figure 6 is a side view of the glass sheet manufacturing plant or warehouse as shown in Figure 1;
- Figure 7 is a front view of the glass sheet manufacturing plant or warehouse as shown in Figure 1,

Figure 8 is a side view of an apparatus according to the invention in a different embodiment.

In the annexed figures, numeral 100 generally designates an apparatus for handling large glass sheets that is adapted to removably hold a glass sheet 3.

In the following description the expression "large glass sheet" refers to a glass sheet having a surface of at least 6 m².

In the example of the figures, the glass sheet 3 is embodied as a 6000 x 3210 mm flat sheet with 15 mm of thickness.

The sheets 3 are stored on stands 7 or racks 70. The rack 70 comprises a support base 8 for the sheets 3 or packs 4, oriented substantially parallel to the surface on which the stand 7 lies, and a back 9 oriented substantially perpendicularly to the support base 8, with an inclined bearing side for said sheets 3 and/or packs 4.

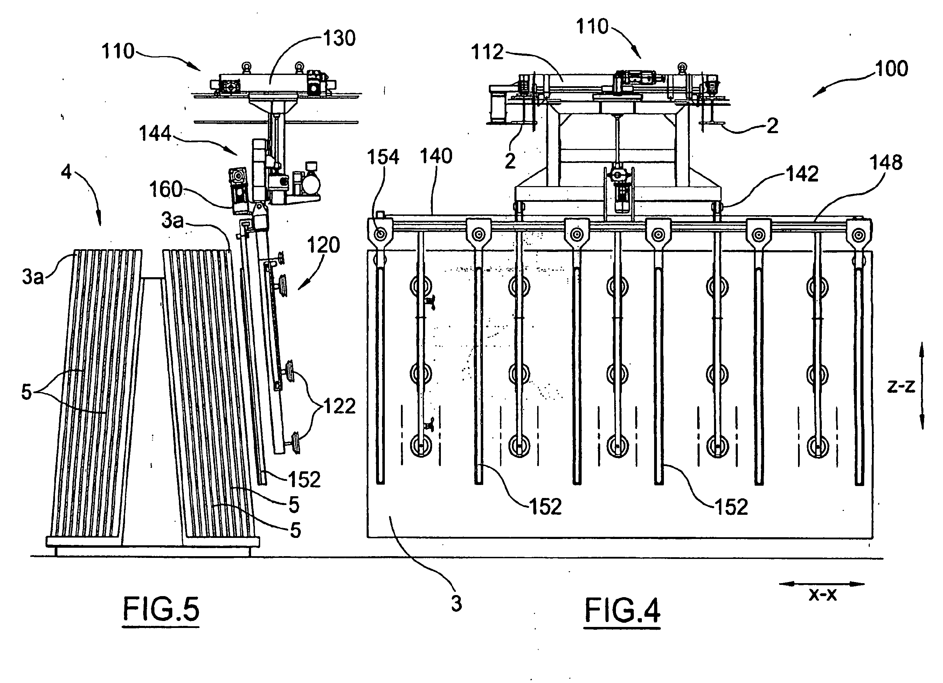

In the embodiment of Figure 5, the stand 7 has a support base 8 for the sheets 3 or the packs 4 and a back 9 with two opposite inclined bearing sides for said sheets 3 and/or the packs 4.

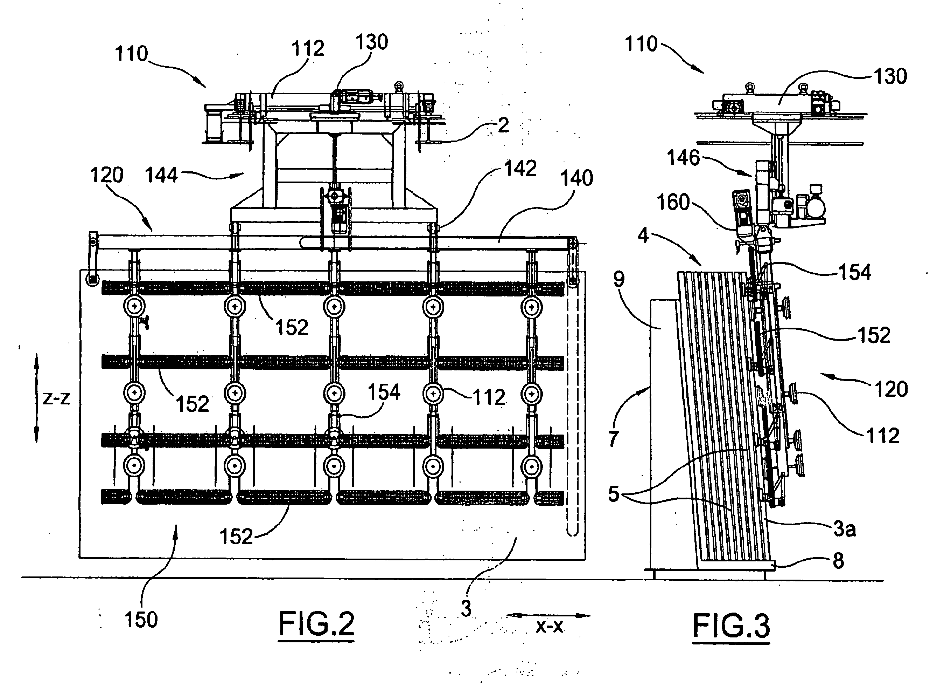

As shown in Figures 3 and 5, each stand 7 is designed to support a plurality of glass sheets 3 or packs 4 made up of glass sheet 3.

Such pack 4 supported by the stand 7 has a first sheet 3a in an outermost position relative to the other glass sheets 3. Such first outermost sheet 3a defines the front side of the pack 4 and can thus be directly accessed by the apparatus 100 for handling the sheets 3, to be selectively picked up from the pack 4.

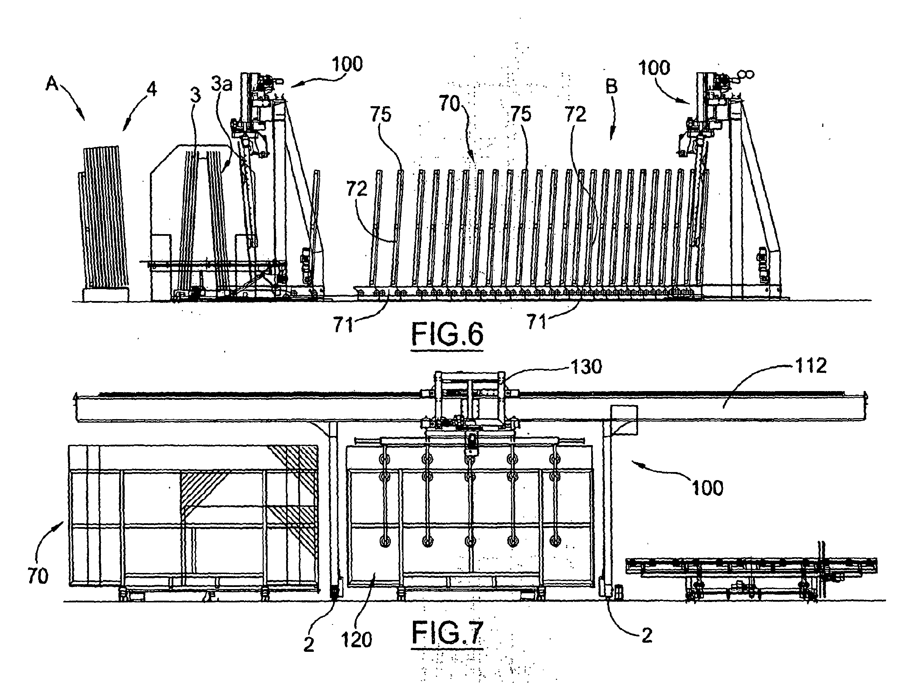

As shown in Figure 6, the rack 70 comprises a plurality of frames 75 oriented substantially vertically. The frames 75 comprise a support base 71 of the glass sheet 3 or the packs 4, that is oriented substantially parallel with respect to the bearing plane of the rack 70, and a back 72 oriented substantially perpendicularly to the support base 71. The back 72 has a bearing inclined plane for the glass sheet 3 and/or for the packs 4.

Preferably, the frames 75 may slide transversally on rails 2a to allow the loosening of each frame 75 from the following frame.

Generally, the glass sheets are picked up from the pack 4 by separating the first sheet 3a from the other glass sheets 3 of the pack 4.

Referring to the embodiment as shown in the figures, the apparatus 100 for handling the sheets 3 is of the overhead crane type. The overhead crane structure comprises a motor-driven carriage 110 sliding on rails 2 preferably along the extension of a typical industrial plant or warehouse in which the overhead crane structure operates.

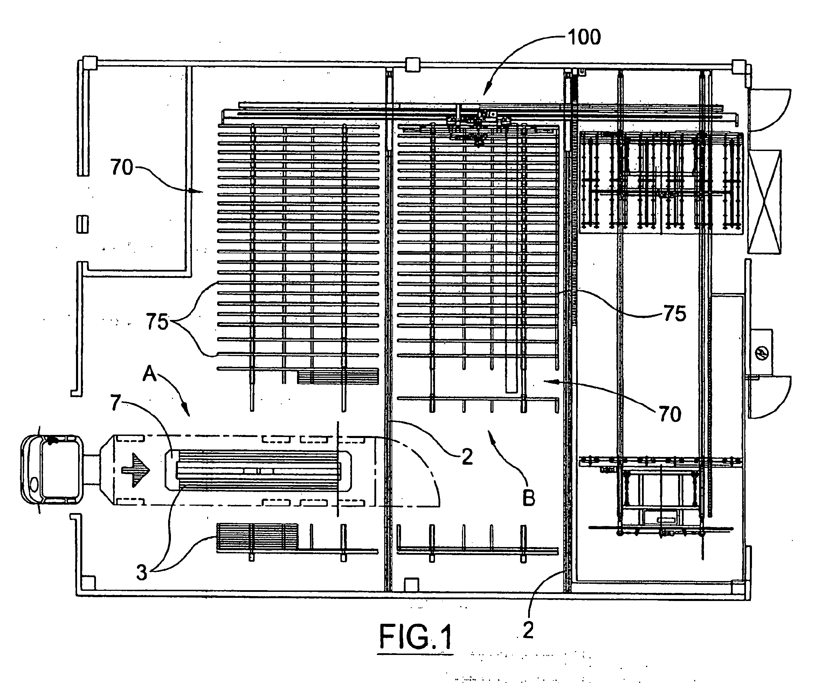

In particular, as shown on Figures 1, 6 and 7, the motor-driven carriage 110 has two opposed side posts which are connected together by a first support crossbar 112 extending substantially orthogonal to the direction of displacement of the apparatus 100. The bottom end of these two side posts is slideably engaged with its respective rail 2 preferably installed on the warehouse floor.

Alternatively, as shown on Figures from 2 to 4, the motor-driven carriage 110 comprises a first support crossbar 112 sliding on aerial rails 2 installed on height on the warehouse.

The first support crossbar 112 supports pick up means 120 which are adapted to selectively pick up a glass sheet, namely said first sheet 3a, from the pack 4.

The pick up means 120 comprise:
- a frame 140,
- motion imparting means 144 for driving the frame 140 and causing such frame 140 to approach the side of the first sheet 3a that forms the front side of the pack 4, and
- gripper means 122, which are supported by the frame 140 and are adapted to removably engage and hold the glass sheet 3a to be picked up.

The pick up means 120 are supported by the first support crossbar 112 through a motor-driven slide 130 adapted to allow displacement of the pick up means 120 relative to the first crossbar 112 along a transversal direction, preferably perpendicular, to the rails 2. As shown on Figures 1 and 7, the crossbar 112 can extend over the lateral uprights so as to allow the motor-driven carriage 110 to be moved along all the extension of the crossbar 112.

Advantageously, the frame 140 may comprise blocking means (not shown in the Figures) adapted to secure the blocking of a pack 4 of sheets 3 to the frame 140, so to allow the lifting and the handling of the frame 140 with a pack of sheets 3.

The slide 130 supports the pick up means 120 to advantageously allow both clockwise and counterclockwise rotation thereof along a rotation axis Z-Z substantially perpendicular relative to the first support crossbar 112.

The motion imparting means 144 support the frame 140 through hinge connection means 142 that allow rotation of the frame 140 about an axis of rotation X-X substantially perpendicular to said rotation axis Z-Z, while providing adjustment of the inclination of the frame 140 relative to the first support crossbar 112. Also, the motion imparting means 144 include driving means 146 which operate on the frame 140 for the latter to come to a correct position adjacent the surface of the sheet 3a to be picked up. Thanks to the structure of the apparatus 100 according to the present invention, the sheet 3a is always handled substantially edgeways, according to a substantially vertical orientation with respect to the floor, so to avoid that the sheet may be damaged because of an excessive inflection.

The above gripper means 122 include a plurality of per se known suction cup means, which are designed to adhere to the surface of the sheet 3a to be picked up.

As shown in Figures 2 and 4, one or more spacers 5 are interposed between some of sheets 3 that form the pack 4, for spacing and separating two or more sheets 3 while preventing them from being in contact all along their main surface. The spacer 5 may be embodied as a strip or block of any material, generally polystyrene, to be applied to the sheets 3.

Generally, one of the surfaces of the spacer 5 is adhesive, for removable attachment thereof to the surface of a sheet 3. Alternatively, the spacer 5 may be joined to the surface of the sheet 3 by a double-sided adhesive tape, or suitably shaped spacers may be designed to allow form fit with a peripheral portion of the glass sheet 3 with which they are designed to be associated.

Advantageously, the handling apparatus 100 has removal means 150 which are designed to operate on the first sheet 3a to remove any spacer 5 associated with the first sheet 3a.

The spacers 5 may be removed from the sheet 3 before or after the step in which the sheet 3 is picked up by the removal means 150, otherwise the spacers may be removed from the sheet 3 while such sheet 3 is being carried by the apparatus 100 for removal.

If the spacers 5 are to be removed from the glass sheet 3a prior to picking up of the glass sheet 3a, the removal means 150 should operate on the surface of the first sheet 3a that forms the front side of the pack 4 of glass sheets 3.

Preferably, the removal means 150 are supported by the pick up means 120 for picking up the sheets 3.

It shall be noted that the provision of the removal means 150 provides apparent advantages in terms of construction, installation and operation of the apparatus 100. Furthermore, by incorporating the removal means 150 for removal of the spacers 5 in the apparatus 100 for handling the sheets 3 the space occupied by the apparatus in industrial warehouses and/on plants is greatly reduced, for easier displacement of the apparatus and increased opportunities of operating such apparatus in narrow spaces.

Such removal means 150 for removal of the spacers 5 further afford:
- reduced risks of accidents during sheet handling, as operators are not required to enter the operating area in which the apparatus 100 is displaced,
- reduced downtime,
- increased security and
- increased throughput of the plant as a result of higher automation.

Therefore, the apparatus 100 advantageously affords such functionality and flexibility as to ensure perfect adaptability thereof to the layout of the industrial warehouse and/or plant.

Advantageously, the apparatus 100 for handling glass sheets 3 has automatic detection means 160 for detecting any spacers 5 associated with the surfaces of the glass sheets to be picked up, particularly the outer surface of the first sheet 3a.

In accordance with one embodiment, these automatic detection means 160 include a presence sensor for detecting any spacer 5 associated with the glass sheets. Alternatively, the spacer 5 may be detected using a photoelectric device, a camera vision system and/or a photocell system.

Preferably, the removal means 150 are directly mounted to the frame 140 with the drive means 154 for operating them. Furthermore, the removal means 150 can be mounted to the second support crossbar 148 with the drive means 154 for operating them.

As shown in Figures 2 and 3, the drive means 154 allow the removal means 150 to move from a backward position relative to the gripper means 122 to a forward position in which they extend beyond the gripper means 122 to operate on the surface of the sheet 3a.

As shown in Figures 2 to 5, the removal means 150 include a removal element 152 which is adapted to interfere with any spacers 5 associated with the outer surface of the first sheet 3a to be picked up. Particularly, the drive means 154 allow operation on the removal element 152 to cause its displacement relative to the first sheet 3a of the pack 4.

According to the embodiment as shown in Figures 1 to 4, the removal element 152 further comprises a paddle. Such paddle preferably has a rubber-coated edge, supported by an arm that is designed to be driven by the drive means 154, namely a motor, to move with a rocking motion along the surface of the first glass sheet 3a, thereby interfering with and removing the spacers 5 associated with the first sheet 3a. Also, the paddle removes by its action any dirt or residues from the surface of the first sheet 3a.

It shall be noted that, if the motion of the removal means 152 is not sufficient to cover the whole surface of the glass sheet, or at least the parts of such surface with the spacers 5 associated therewith, then the whole frame 140 needs simply be displaced relative to the surface of the glass sheet for the removal means 152 to be able to operate on all the spacers 5.

As shown in Figure 4, the drive means 154 allow the removal means 152 to slide along the second support crossbar 148 in the direction X-X to remove the spacers 5 on the surface of the sheet 3. Thus, the handling apparatus 1 may be advantageously equipped with a single removal means 152 that is able to both slide and rock along the surface of the sheet 3a to be picked up, thereby removing all the spacers 5 on the surface of the sheet 3a.

Alternatively, the removal element 152 may include:
- a brush and/or an awl designed for engagement with the spacers 5,
- a clip or a suction cup for picking up the spacers 5 and/or
- a blower for blowing an air jet against the spacers 5 to cause removal thereof from the glass sheet.

Such brush essentially includes a tubular member with a plurality of filaments, variously arranged thereon, and extending therefrom in a known manner.

Preferably, the tubular element is designed to be connected to motor means for brush rotation. The filaments stretch out as the brush is rotated, thereby interfering with the spacers 5 and removing them.

In one embodiment, the apparatus 100 for handling glass sheets comprises placing means (not shown) which are designed to operate on said first sheet 3a to place one or more spacers 5 on the first sheet 3a.

For this purpose, the apparatus can be provided of loading means (not shown in the Figures) which contain a plurality of spacers adapted to be picked up in case of need from said placing means of spacers.

Essentially, during the operation of the apparatus, the placing means provide to pick up the spacer from the loading means and to place the spacers on the sheet 3a.

The placing of the spacers 5 on the sheet 3a may occur after or before the placing of the sheet 3 on stands 7 or racks 70, or the placing of the spacers may occur during the transport of the same sheet 3 by the apparatus 100.

Preferably, the placing means are supported by the pick up means 120 of the sheets 3 directly.

Preferably, the removal means 150 may accomplish the work of the placing means. For example, it is possible to use the same suction cups, which are normally used for removing the spacers, as placing means of the spacers 5.

In one embodiment not shown, the pick up means 120 comprises lifting means adapted to lift simultaneously a plurality of glass sheets 3 corresponding to a pack 4 of sheets.

The apparatus 100 for handling large glass sheets according to the invention provides a completely automatic management of the picking up and the placing of the sheets and/or the packs by the presence of the removal means and/or the placing means from and towards the racks 70, from and towards the trucks, from and towards the stands 7 and vice versa without any manual intervention by the operator.

Advantageously, the apparatus 100 is installed close to one or more racks 70. As shown in Figures 1 and 7, the apparatus 100 is able to insert the pick up means 120 onto the rack 70, thanks in that, as stated above, the motor-driven slide 130 is moved relative to the first crossbar 112 so it can move in a transversal direction, preferably a perpendicular direction, with respect to rails 2.

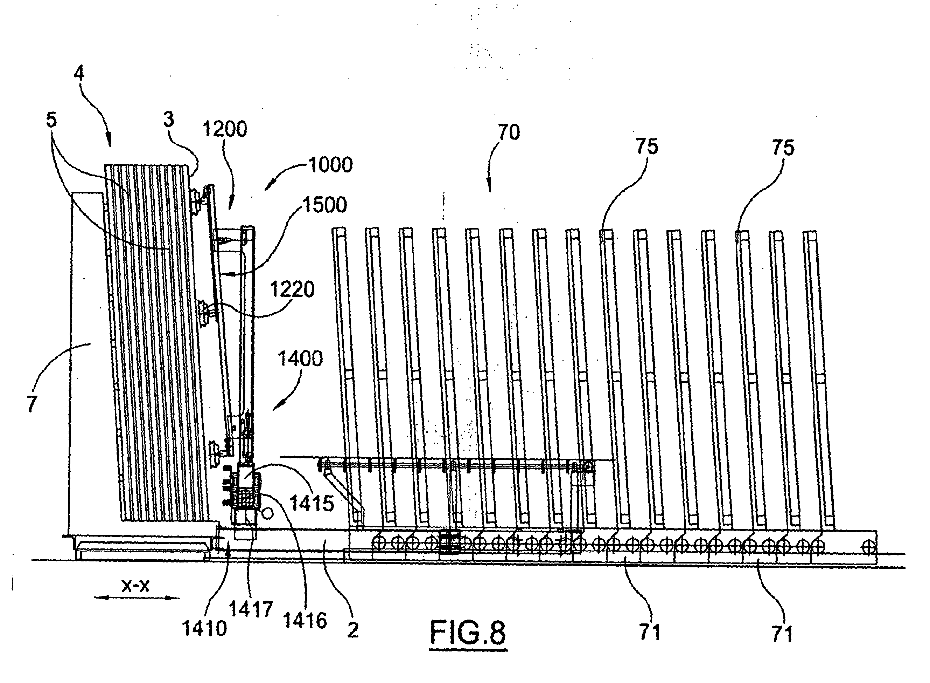

According to a further embodiment shown in Figure 8, numeral 1000 indicates an apparatus for handling large glass sheets adapted to hold a glass sheet 3 in a removable way. The apparatus 1000 comprises pick up means 1200 for engaging a first sheet 3a and to removing it from said pack 4 of sheets 3 in which such pick up means 1200 are adapted to insert themselves onto a rack 70, and vice versa.

The apparatus 1000 comprises a frame 1400 and motion imparting means 1440 for driving the frame 1400 and causing it to approach the side of the sheet 3. In particular, the frame 1400 may slide on rails 2 on floor along the direction X-X shown in Figure 8.

The pick up means 1200 are supported by the frame 1400 which further comprises a sliding unit 1410. The sliding unit 1410 is embodied as an horizontal bar 1415 extending along a transversal direction K-K, preferably perpendicular to the direction X-X, on which the pick up means 1200 are fixed. The horizontal bar 1415 can slide on its length over a second bar 1416 positioned below the first bar 1415, which, in turn, can slide on its length over a third bar 1417 positioned below the second bar 1416. The third bar 1417 is supported by the frame 1410 in a way that it can be rotated around an horizontal axis which extends on the K-K direction with respect to the frame 1400.

The apparatus 1000 comprises gripper means 1500 which are supported by the pick up means 1200 and they comprise gripper means 1220 for engaging and holding the sheet 3 in a removable way.

Advantageously, the apparatus 1000 comprises the above removal means 150 for removing the spacers 5. The method for handling the glass sheets 3 comprises the steps of:
a) forming the pack 4 of sheets 3 to be handled with the spacers 5 interposed there between to separate such sheets 3, wherein the pack 4 of sheets 3 has a first sheet 3a in an outermost position relative to the other sheets 3 to define a front side of the pack 4 and to be accessed from the front side of the pack 4 of sheets 3 to be picked up;
b) providing a glass sheet handling apparatus 100 which is adapted to handle the first sheet 3a of the pack 4 to remove the first sheet 3a from the pack 4 of sheets 3 and
c) operating on the sheets 3 for the first sheet 3a to be removed from the pack 4 by means of the apparatus 100.

Advantageously, in the above method for handling the sheets 3, said step of operating on the sheets 3 to cause the first sheet 3a to be removed from the pack 4 by the apparatus 100 further includes the step of correctly moving the pick up means 120, by the motion imparting means 144, towards and against the surface of the sheet 3a to be picked up. Particularly, the frame 140 is oriented substantially parallel to the surface of the sheet 3a to allow the gripper means 122 to adhere to the sheet 3a to be picked up.

Figures 1, 6 and 7 show a typical glass sheet manufacturing plant or a warehouse for storage of flat glass sheets 3. The loading area A is an area in which means of transport such as trucks, tractor trailers, straight trucks with trailers or trains discharge one or more stands 7 with packs 4 of sheets 3 supported thereon, and placed within the area in which the overhead crane structure is designed to operate. Thus, the area A can be reached by the handling apparatus 100 which picks up the sheets 3 or the packs 4 and carries such sheets 3 or packs 4 to the unloading area B, and then places them on stands 7 or work surfaces.

The unloading areas B, which are themselves situated within the area in which the overhead crane structure is designed to operate, are defined as processing (e.g. cutting) areas for the glass sheets 3.

It shall be noted that the loading area A and the unloading area B can be reversed, which means that the glass sheets 3 may be also picked up from the unloading area B and carried to the loading area A to be then laid on further stands 7.

The sheet 3a will be picked up using gripper means 122 adapted to hold the sheet 3. Advantageously, the above glass sheet handling method comprises the steps of:
d) providing removal means 150 in the apparatus 100, for removing spacers 5 from the sheet 3,
e) checking the presence of spacers 5 associated to the first sheet 3a,
f) operating the removal means 150 when the presence of the spacers 5 to be associated with the first sheet 3a is found.

Alternatively, in the method for handling glass sheet the above step f) can be substituted by this step:
f) operating the removal means 150 if and only if when the presence of the spacers 5 to be associated with the first sheet 3a is found.

The method for handling sheets 3 allows picking up of sheets 3 and simultaneous removal of spacers 5 associated therewith by a single procedure, which is susceptible of being automated, thereby providing a method for effective and fast handling, at lower costs and with no shutdown.

Advantageously, in an automated procedure, the method of the invention further includes a step g) of detection of a further sheet 3 to be picked up. If the step g) gives an affirmative result, the above steps a) to c) may be automatically repeated.

Thus, the above steps of picking up the glass sheets and handling them are carried out as many times as there are glass sheets in the pack 4. Once a glass sheet has been laid in the unloading area B, if further sheets 3 to be handled are present in the loading area A, then the apparatus 100 of the invention uninterruptedly repeats the above steps a) to c), with no intervention by the operators.

The step e) of checking the presence of spacers 5 is advantageous carried out on the side of the first sheet 3a that forms the front side of the pack 4 of sheets 3.

Advantageously, the removal means 150 are adapted to move from a backward position relative to the gripper means 122 to a forward position in which they extend beyond the gripper means 122 to operate on the surface of the sheet 3a for removing any spacer 5.

The apparatus 100 comprises processing means 170, such as PLCs (Programmable Logic Controllers) or PCs, in which the exact position of the stands 7 with the packs 4 of glass sheets thereon. Thus, the handling apparatus 100 is able to automatically move within the warehouse.

Preferably, the step e) of checking for spacers 5 is carried out before removal of the first sheet 3a of the pack 4 by the apparatus 100.

Otherwise, the step e) may be carried out during handling of the first sheet 3a of the pack 4 by the apparatus 100.

The method for handling the glass sheets according to the invention that includes the step e) of checking the presence of at least one spacer 5 associated with said first sheet 3a, also provides transmission of a control signal to the processing means 170 based on the result of such check.

More particularly, the processing means 170 transmit a drive control to the removal means 150 to remove the spacers 5 from the surface of the sheet 3a to be picked up. It will be finally understood that a number of changes and variants may be made to the method and apparatus as described and illustrated herein, within the inventive concept disclosed in the annexed claims. For instance, those skilled in the art will understand that the method for handling the glass sheets 3 may be carried out using a different apparatus, such as a hoist, a forklift, a crane or a lifting apparatus.

## Claims

1. An apparatus for handling (100) a pack (4) of sheets (3) of large sizes, said pack (4) of sheets (3) comprising at least two sheets (3) with spacers (5) interposed there between to separate said two sheets (3),
said pack (4) of sheets (3) having at least one first sheet (3a) in an outermost position relative to the other sheets (3) to define a front side of said pack (4) and to be accessed and handled from the front side of said pack (4), said apparatus (100) for handling sheets (3) comprising pick up means (120) for picking up the sheets (3), which are adapted to engage said first sheet (3a) to remove it from said pack (4) of sheets (3), said pick up means (120) for picking up the sheets (3) comprising:
- a frame (140),
- motion imparting means (144) for driving said frame (140) and causing it to approach the side of said first sheet (3a) that forms said front side of said pack (4) of sheets (3), said motion imparting means (144) supporting said frame (140) through hinge connection means (142) that allow rotation of said frame (140) about an axis of rotation, and
- gripper means (122) associated with said frame (140) for removably engaging and holding a sheet (3),
said apparatus comprising removal means (150) which are designed to operate on said first sheet (3a) to remove said spacers (5) from said first sheet (3a),
wherein said removal means (150) are supported by said pick up means (120) and they are mounted to said frame (140),
**characterized in that** said removal means (150) are directly mounted to said frame (140) with drive means (154) for operating them and they comprise at least one removal element (152) which is adapted to interfere with any spacers (5) associated with the outer surface of the first sheet (3a) to be picked up,
wherein said drive means (154) allow said removal means (150) to slide along a support crossbar (148) in the direction (X-X) of said axis of rotation to remove the spacers (5) on the surface of the sheet (3).

2. An apparatus as claimed in claim 1 comprising automatic detection means (160) for detecting at least one spacer (5) associated with a sheet (3a).

3. An apparatus as claimed in claim 2, wherein said automatic detection means (160) for detecting at least one spacer (5) include a vision means, a presence sensor and/or a photoelectric detection device.

4. An apparatus as claimed in claim 1, wherein said removal element (152) includes a paddle or a brush.

5. An apparatus as claimed in claim 1 or 4, comprising placing spacer means which are designed to operate on the first sheet (3a) for placing one or more spacers (5) on the first sheet (3a).

6. An apparatus as claimed in claim 5, comprising loading means for containing a plurality of spacers adapted to be picked up from said placing means of spacers.

7. An apparatus as claimed in any one of claims 1 to 6, wherein said frame (140) comprises blocking means adapted to secure the blocking to the frame (140) of a pack (4) of sheets (3), so to allow the lifting and the handling of the frame (140) with a pack of sheets (3).

8. A method for handling large flat glass sheets (3) grouped in packs (4), said method comprising the steps of:
a) forming a pack (4) of sheets (3) to be handled comprising at least two sheets (3) with spacers (5) interposed there between to separate said two sheets, in said pack (4) of sheets (3) at least one first sheet (3a) being provided in an outermost position relative to the other sheets (3) to define a front side of said pack (4) and to be accessed from the front side of said pack (4) of sheets (3) to be handled;
b) providing an apparatus for handling (100) a pack (4) of sheets (3) of large sizes as claimed in any one of claims 1 to 7, and
c) operating on said sheets (3) for the first sheet (3a) to be removed from said pack (4) by said apparatus (100),
**characterized in that it comprises the steps of:**
d) providing removal means (150) in said apparatus (100) for removing spacers (5) from a sheet;
e) checking the presence of at least one spacer (5) associated to said first sheet (3a) and
f) operating said removal means (150) when the presence of at least one spacer (5) associated with said first sheet (3a) is found in order to remove said at least one spacer (5).

9. A method as claimed in claim 8, wherein said step e) of checking the presence of at least one spacer (5) associated with said first sheet (3a) is carried out on the side of said first sheet (3a) that defines said front side of said pack (4) of sheets (3).

10. A method as claimed in claim 9, wherein said step e) of checking the presence of at least one spacer (5) associated with said first sheet (3a) is carried out before removing said first sheet (3a) from said pack (4).

11. A method as claimed in claim 9, wherein said step e) of checking the presence of at least one spacer (5) associated with said first sheet (3a) is carried out during removal of said first sheet (3a) from said pack (4) by said apparatus (100).

12. A method as claimed in any one of claims 8 to 11, wherein said step e) of checking the presence of at least one spacer (5) associated with said first sheet (3a) provides transmission of a control signal to the processing means (170) based on the result of said check.

13. A method as claimed in claim 11, wherein said processing means (170) transmit a driving control to said removal means (150).

14. A method as claimed in any one of claims 8 to 13, wherein said step c) of operating on said sheets (3) includes moving said apparatus (100) towards said at least one sheet (3a) and gripping said sheet (3a) or said pack (4) through pick up means (120).

15. A method as claimed in any one of claims 8 to 14, wherein said sheet (3) is gripped by at least one gripper means (122) which is adapted to hold said at least one sheet (3).

16. A method as claimed in any one of claims 8 to 15, including the further step g) of detecting at least one further sheet (3) and of repeating the steps a) to c) and/or the steps e) and f) if the step g) is found.

17. Warehouse comprising:
- at least one rack (70),
- an apparatus (100,1000) as claimed in any one of claims 1 to 7,
wherein said rack (70) comprises a plurality of frames (75) oriented substantially vertically, said frames (75) comprising a support base (71) for glass sheet (3) or packs (4), oriented substantially parallel with respect to the bearing plane of the rack (70), and a back (72) oriented substantially perpendicular to the support base (71), said back (72) having a bearing inclined plane for said glass sheet (3) and/or said packs (4),
**characterized in that** said apparatus (100,1000) is positioned close to said rack (70) and said pick up means (120,1200) which can be inserted between said frames (75) for picking up the sheet (3) or a pack (4) of sheet.

## Patentansprüche

1. Vorrichtung zum Behandeln (100) eines Packens (4) von Scheiben (3) in Großformat, wobei der Packen (4) von Scheiben (3) zumindest zwei Scheiben (3) mit Distanzstücken (5) umfaßt, die dazwischen eingelegt sind, um die zwei Scheiben (3) zu trennen,
wobei der Packen (4) von Scheiben (3) zumindest eine erste Scheibe (3a) in einer äußersten Position bezüglich der anderen Scheiben (3) zum Definieren einer Vorderseite des Packens (4) und für ihren Zugriff und ihre Behandlung von der Vorderseite des Packens (4) aufweist, wobei die Vorrichtung (100) zum Behandeln von Scheiben (3) Aufnahmemittel (120) zum Aufnehmen der Scheiben (3) umfaßt, die dazu geeignet sind, die erste Scheibe (3a) in Eingriff zu nehmen, um sie von dem Packen (4) von Scheiben (3) zu entfernen, die Aufnahmemittel (120) zum Aufnehmen der Scheiben (3) umfassend:
- ein Gestell (140),
- bewegungsmitteilende Mittel (144) zum Antreiben des Gestells (140) und zum Bewirken, daß es sich der Seite der ersten Scheibe (3a) nähert, die die Vorderseite des Packens (4) von Scheiben (3) ausbildet, wobei die bewegungsmitteilenden Mittel (144) das Gestell (140) über Drehgelenkverbindungsmittel (142) stützen, die die Drehung des Gestells (140) um eine Drehachse ermöglichen, und
- Greifmittel (122), die dem Gestell (140) zum lösbaren Ineingriffnehmen und Halten einer Scheibe (3) zugeordnet sind,
wobei die Vorrichtung Entfernungsmittel (150) umfaßt, die zum Einwirken auf die erste Scheibe (3a) zum Entfernen der Distanzstücke (5) von der ersten Scheibe (3a) gestaltet sind,
wobei die Entfernungsmittel (150) durch die Aufnahmemittel (120) gestützt sind und an dem Gestell (140) angebracht sind,
**dadurch gekennzeichnet, daß** die Entfernungsmittel (150) direkt an dem Gestell (140) mit Antriebsmitteln (154) für ihren Betrieb angebracht sind und sie zumindest ein Entfernungselement (152) umfassen, das dazu geeignet ist, sich auf jegliche Distanzstücke (5) auszuwirken, die der Außenfläche der ersten Scheibe (3a), welche aufgenommen werden soll, zugeordnet sind,
wobei es die Antriebsmittel (154) den Entfernungsmitteln (150) ermöglichen, eine Stützquerstange (148) entlang in der Richtung (X-X) der Drehachse zu gleiten, um die Distanzstücke (5) auf der Oberfläche der Scheiben (3) zu entfernen.

2. Vorrichtung nach Anspruch 1, umfassend automatische Erkennungsmittel (160) zum Erkennen von zumindest einem Distanzstück (5), das einer Scheibe (3a) zugeordnet ist.

3. Vorrichtung nach Anspruch 2, wobei die automatischen Erkennungsmittel (160) zum Erkennen von zumindest einem Distanzstück (5) Sichtmittel, einen Anwesenheitssensor und/oder ein photoelektrisches Erkennungsgerät enthalten.

4. Vorrichtung nach Anspruch 1, wobei das Entfernungselement (152) eine Schaufel oder eine Bürste enthält.

5. Vorrichtung nach einem der Ansprüche 1 oder 4, umfassend Distanzstückanordnungsmittel, die zum Einwirken auf die erste Scheibe (3a) zum Anordnen von einem oder mehr Distanzstücken (5) auf der ersten Scheibe (3a) gestaltet sind.

6. Vorrichtung nach Anspruch 5, umfassend Lademittel zum Enthalten von mehreren Distanzstücken, die zum Aufnehmen aus den Distanzstückanordnungsmitteln geeignet sind.

7. Vorrichtung nach einem der Ansprüche 1 bis 6, wobei das Gestell (140) Sperrmittel umfaßt, die dazu geeignet sind, das Sperren eines Packens (4) von Scheiben (3) an dem Gestell (140) zu sichern, um dadurch das Anheben und Behandeln des Gestells (140) mit einem Packen von Scheiben (3) zu ermöglichen.

8. Verfahren zum Behandeln von großen flachen Glasscheiben (3), die in Packen (4) gruppiert sind, das Verfahren folgende Schritte umfassend:
a) Ausbilden eines Packens (4) von Scheiben (3), die behandelt werden sollen, umfassend zumindest zwei Scheiben (3), zwischen denen Distanzstücken (5) angeordnet sind, um die beiden Scheiben zu trennen, wobei in dem Packen (4) von Scheiben (3) zumindest eine erste Scheibe (3a) in einer äußersten Position bezüglich der anderen Scheiben (3) vorgesehen ist, um eine Vorderseite des Packens (4) zu definieren und auf die von der Vorderseite des Packens (4) von Scheiben (3), die behandelt werden sollen, zugegriffen werden soll,
b) Bereitstellen einer Vorrichtung zum Behandeln (100) eines Packens (4) von Scheiben (3) in Großformat nach einem der Ansprüche 1 bis 7, und
c) Einwirken auf die Scheiben (3), damit die erste Scheibe (3a) durch die Vorrichtung (100) von dem Packen (4) entfernt wird,
**dadurch gekennzeichnet, daß** es folgende Schritte umfaßt:
d) Bereitstellen von Entfernungsmitteln (150) in der Vorrichtung (100) zum Entfernen von Distanzstücken (5) von einer Scheibe,
e) Prüfen des Vorhandenseins von zumindest einem Distanzstück (5), das der ersten Scheibe (3a) zugeordnet ist, und
f) Betreiben des Entfernungsmittels (150), wenn das Vorhandensein von zumindest einem Distanzstück (5), das der ersten Scheibe (3a) zugeordnet ist, vorgefunden wird, um das zumindest eine Distanzstück (5) zu entfernen.

9. Verfahren nach Anspruch 8, wobei der Schritt e) des Prüfens des Vorhandenseins von zumindest einem Distanzstück (5), das der ersten Scheibe (3a) zugeordnet ist, auf der Seite der ersten Scheibe (3a) ausgeführt wird, die die Vorderseite des Packens (4) von Scheiben (3) definiert.

10. Verfahren nach Anspruch 9, wobei der Schritt e) des Prüfens des Vorhandenseins von zumindest einem Distanzstück (5), das der ersten Scheibe (3a) zugeordnet ist, vor dem Entfernen der ersten Scheibe (3a) von dem Packen (4) ausgeführt wird.

11. Verfahren nach Anspruch 9, wobei der Schritt e) des Prüfens des Vorhandenseins von zumindest einem Distanzstück (5), das der ersten Scheibe (3a) zugeordnet ist, während der Entfernung der ersten Scheibe (3a) von dem Packen (4) durch die Vorrichtung (100) ausgeführt wird.

12. Verfahren nach einem der Ansprüche 8 bis 11, wobei der Schritt e) des Prüfens des Vorhandenseins von zumindest einem Distanzstück (5), das der ersten Scheibe (3a) zugeordnet ist, die Übertragung eines Steuersignals an die Verarbeitungsmittel (170) auf Grundlage des Prüfergebnisses vorsieht.

13. Verfahren nach Anspruch 11, wobei die Verarbeitungsmittel (170) eine Antriebssteuerung an die Entfernungsmittel (150) übertragen.

14. Verfahren nach einem der Ansprüche 8 bis 13, wobei der Schritt c) des Einwirkens auf die Scheiben (3) das Verschieben der Vorrichtung (100) zu der zumindest einen Scheibe (3a) hin und Greifen der Scheibe (3a) oder des Packens (4) über Aufnahmemittel (120) enthält.

15. Verfahren nach einem der Ansprüche 8 bis 14, wobei die Scheibe (3) von zumindest einem Greifmittel (122) ergriffen wird, das dazu geeignet ist, die zumindest eine Scheibe (3) zu halten.

16. Verfahren nach einem der Ansprüche 8 bis 15, enthaltend den weiteren Schritt g) des Erkennens von zumindest einer weiteren Scheibe (3) und Wiederholens der Schritte a) bis c) und/oder der Schritte e) und f), falls der Schritt g) vorgefunden wird.

17. Warenlager, umfassend:
- zumindest einen Ständer (70),
- eine Vorrichtung (100, 1000) nach einem der Ansprüche 1 bis 7,
wobei der Ständer (70) mehrere Gestelle (75) umfaßt, die im wesentlichen vertikal ausgerichtet sind, wobei die Gestelle (75) eine Stützbasis (71) für Glasscheiben (3) oder Packen (4), welche im wesentlichen parallel bezüglich der Lagerebene des Ständers (70) ausgerichtet ist, und einen Rücken (72) umfassen, der im wesentlichen senkrecht zu der Stützbasis (71) ausgerichtet ist, wobei der Rücken (72) eine Lagemeigungsebene für die Glasscheibe (3) und/oder die Packen (4) aufweist,
**dadurch gekennzeichnet, daß** die Vorrichtung (100, 1000) nahe an dem Ständer (70) und den Aufnahmemitteln (120, 1200) angeordnet ist, die zwischen den Gestellen (75) zum Aufnehmen der Scheibe (3) oder eines Packens (4) von Scheiben eingefügt sein können.

## Revendications

1. Dispositif de manipulation (100) d'un paquet (4) de vitres (3) de tailles importantes, ledit paquet (4) de vitres (3) comprenant au moins deux vitres (3) entre lesquelles sont disposés des éléments d'espacement (5) afin de séparer les deux vitres (3) l'une de l'autre,
ledit paquet (4) de vitres (3) comprenant au moins une première vitre (3a) dans une position extrême par rapport aux autres vitres (3) afin de définir une face frontale du paquet (4), l'accès à et la manipulation de celle-ci devant se faire depuis la face frontale du paquet (4), ledit dispositif (100) de manipulation de vitres (3) comprenant des moyens de réception (120) pour relever les vitres (3), qui sont adaptés pour entrer en prise avec ladite première vitre (3a) pour l'enlever du paquet (4) de vitres (3), lesdits moyens de réception (120) destinés à relever les vitres (3) comprenant :
- un châssis (140),
- des moyens à imprimer un mouvement (144) pour entraîner ledit châssis (140) et pour provoquer son rapprochement du côté de ladite première vitre (3a), qui forme la face frontale du paquet (4) de vitres (3), lesdits moyens à imprimer un mouvement (144) supportant ledit châssis (140) par le biais de moyens de liaison à rotule (142) permettant la rotation du châssis (140) autour d'un axe de rotation, et
- des moyens de préhension (122) associés audit châssis (140) pour entrer en prise avec et maintenir une vitre (3) de manière amovible,
ledit dispositif comprenant des moyens d'enlèvement (150) qui sont conçus pour agir sur ladite première vitre (3a) afin d'enlever lesdits éléments d'espacement (5) de la première vitre (3a),
les moyens d'enlèvement (150) étant supportés par lesdits moyens de réception (120) et étant montés sur ledit châssis (140),
**caractérisé par le fait que** lesdits moyens d'enlèvement (150) sont montés directement sur ledit châssis (140) avec des moyens d'entraînement (154) pour les faire fonctionner et comprennent au moins un élément d'enlèvement (152) qui est adapté pour agir sur tous les éléments d'espacement (5) associés à la surface extérieure de la première vitre (3a) destinée à être relevée,
les moyens d'entraînement (154) permettant aux moyens d'enlèvement (150) de glisser le long d'une barre transversale de support (148) suivant la direction (X-X) de l'axe de rotation afin d'enlever les éléments d'espacement (5) situés sur la surface des vitres (3).

2. Dispositif selon la revendication 1, comprenant des moyens de détection automatique (160) destinés à détecter au moins un élément d'espacement (5) associé à une vitre (3a).

3. Dispositif selon la revendication 2, dans lequel les moyens de détection automatique (160) destinés à détecter au moins un élément d'espacement (5) comprennent un moyen de vision, un capteur de présence et/ou un dispositif de détection photoélectrique.

4. Dispositif selon la revendication 1, dans lequel ledit élément d'enlèvement (152) comprend une palette ou une brosse.

5. Dispositif selon l'une quelconque des revendications 1 ou 4, comprenant des moyens à placer les éléments d'espacement, qui sont conçus pour agir sur ladite première vitre (3a) afin de placer un ou plusieurs élément(s) d'espacement (5) sur ladite première vitre (3a).

6. Dispositif selon la revendication 5, comprenant des moyens de chargement pour contenir une pluralité d'éléments d'espacement adaptés pour être reçus par lesdits moyens à placer les éléments d'espacement.

7. Dispositif selon l'une quelconque des revendications 1 à 6, dans lequel ledit châssis (140) comprend des moyens de blocage adaptés pour assurer le blocage d'un paquet (4) de vitres (3) sur ledit châssis (140) de manière à permettre ainsi de soulever et de manipuler ledit châssis (140) avec un paquet de vitres (3).

8. Procédé de manipulation de vitres (3) plates de taille importante qui sont regroupées en paquets (4), ledit procédé comprenant les étapes suivantes :
a) former un paquet (4) de vitres (3) destinées à être manipulées, comprenant au moins deux vitres (3) entre lesquelles sont disposés des éléments d'espacement (5) afin de séparer les deux vitres l'une de l'autre ; dans ledit paquet (4) de vitres (3), au moins une première vitre (3a) étant prévue dans une position extrême par rapport aux autres vitres (3) afin de définir une face frontale du paquet (4), l'accès à celle-ci devant se faire depuis ladite face frontale du paquet (4) de vitres (3) destinées à être manipulées,
b) fournir un dispositif de manipulation (100) d'un paquet (4) de vitres (3) de tailles importantes, tel que revendiqué à l'une des revendications 1 à 7, et
c) agir sur lesdites vitres (3) pour que ladite première vitre (3a) soit enlevée du paquet (4) par ledit dispositif (100),
**caractérisé par le fait qu'il comprend les étapes suivantes:**
d) fournir des moyens d'enlèvement (150) dans ledit dispositif (100) pour enlever des éléments d'espacement (5) d'une vitre,
e) vérifier la présence d'au moins un élément d'espacement (5) associé à ladite première vitre (3a), et
f) faire fonctionner ledit moyen d'enlèvement (150) lorsque la présence d'au moins un élément d'espacement (5) associé à la première vitre (3a) est constatée, afin d'enlever ledit au moins un élément d'espacement (5).

9. Procédé selon la revendication 8, dans lequel l'étape e) consistant à vérifier la présence d'au moins un élément d'espacement (5) associé à ladite première vitre (3a) est mise en oeuvre du côté de la première vitre (3a), qui définit la face frontale du paquet (4) de vitres (3).

10. Procédé selon la revendication 9, dans lequel l'étape e) consistant à vérifier la présence d'au moins un élément d'espacement (5) associé à ladite première vitre (3a) est mise en oeuvre avant que la première vitre (3a) soit enlevée du paquet (4).

11. Procédé selon la revendication 9, dans lequel l'étape e) consistant à vérifier la présence d'au moins un élément d'espacement (5) associé à ladite première vitre (3a) est mise en oeuvre pendant que la première vitre (3a) est enlevée du paquet (4) par ledit dispositif (100).

12. Procédé selon l'une quelconque des revendications 8 à 11, dans lequel l'étape e) consistant à vérifier la présence d'au moins un élément d'espacement (5) associé à ladite première vitre (3a) prévoit la transmission d'un signal de commande aux moyens de traitement (170) sur la base du résultat de ladite vérification.

13. Procédé selon la revendication 11, dans lequel lesdits moyens de traitement (170) transmettent une commande d'entraînement aux moyens d'enlèvement (150).

14. Procédé selon l'une quelconque des revendications 8 à 13, dans lequel l'étape c) consistant à agir sur les vitres (3) comprend le déplacement dudit dispositif (100) vers ladite au moins une vitre (3a) ainsi que la préhension de la vitre (3a) ou du paquet (4) par l'intermédiaire de moyens de réception (120).

15. Procédé selon l'une quelconque des revendications 8 à 14, dans lequel ladite vitre (3) est saisie par au moins un moyen de préhension (122) qui est adapté pour retenir ladite au moins une vitre (3).

16. Procédé selon l'une quelconque des revendications 8 à 15, comprenant l'étape supplémentaire g) consistant à détecter au moins une autre vitre (3) et à répéter les étapes a) à c) et/ou les étapes e) et f) si ladite étape g) est constatée.

17. Entrepôt comprenant:
- au moins un support (70),
- un dispositif (100, 1000) selon l'une quelconque des revendications 1 à 7,
ledit support (70) comprenant plusieurs cadres (75) qui sont orientés pour l'essentiel verticalement, lesdits cadres (75) comprenant une base de support (71) pour vitres (3) ou paquets (4), orientée pour l'essentiel parallèlement par rapport au plan d'appui dudit support (70), ainsi qu'une face arrière (72) orientée pour l'essentiel perpendiculairement à ladite base de support (71), la face arrière (72) présentant un plan incliné d'appui pour la vitre (3) et/ou les paquets (4),
**caractérisé par le fait que** ledit dispositif (100, 1000) est disposé près dudit support (70) et des moyens de réception (120, 1200) qui peuvent être insérés entre lesdits cadres (75) pour relever la vitre (3) ou un paquet (4) de vitres.
